# EUROPÄISCHE PATENTSCHRIFT

(11) **EP 0 766 890 B1**
(45) Veröffentlichungstag und Bekanntmachung des Hinweises auf die Patenterteilung: **25.11.1998**
(21) Anmeldenummer: 94930203.8
(22) Anmeldetag: 21.10.1994
(51) Int. Cl.: H04B 10/22

(54) **VORRICHTUNG ZUM SENDEN UND EMPFANGEN VON KREISENDEN LICHTSIGNALEN**
DEVICE FOR TRANSMITTING AND RECEIVING ROTATING LIGHT SIGNALS
DISPOSITIF DE TRANSMISSION ET DE RECEPTION DE SIGNAUX LUMINEUX EN ROTATION

(30) Priorität: 21.06.1994 DE 4421616
(43) Veröffentlichungstag der Anmeldung: 09.04.1997
(73) Patentinhaber: Schleifring und Apparatebau GmbH, 82256 Fürstenfeldbruck (DE)
(72) Erfinder: POISEL, Hans, D-91227 Leinburg (DE); KODL, Georg, D-90403 Nürnberg (DE); DANDIN, Erhan, D-91058 Erlangen (DE)
(74) Vertreter: Böhme, Volker, Dipl.-Ing.
(86) Internationale Anmeldenummer: EP9403464
(87) Internationale Veröffentlichungsnummer: WO9535605

(56) Entgegenhaltungen:
- DE-A- 2 441 359
- FR-A- 2 514 918
- PATENT ABSTRACTS OF JAPAN vol. 15, no. 278 (P-1227) 15. Juli 1991 & JP,A,03 094 206 (AGENCY OF IND SCIENCE & TECH) 19. April 1991

## Beschreibung

Die Erfindung betrifft eine Vorrichtung zum Senden und Empfangen von kreisenden Lichtsignalen, die z.B. an einem Untersuchungsgerät der Medizintechnik vorgesehen ist, das durch Messung ermittelte Information mittels Informationssignalen abgibt, bei der ein rotierender Senderträger mit einer stellungsfesten Sendeeinrichtung für Signallicht versehen ist, bei der parallel zu einer von der Sendeeinrichtung durchlaufenen Kreisbahn auf einem Kreis eine ortsfeste Detektor-Empfangseinrichtung angeordnet ist und bei der ein Sender der Sendeeinrichtung von der Empfangseinrichtung einen Abstand aufweist.

Eine bekannte (EP-OS 0 381 786) Vorrichtung dieser Art ist in der Medizintechnik und zwar bei der Computertomografie vorgesehen. Der Senderträger ist ein einen Patienten umschließender Trägerring oder Hohlring auf dem verteilt mehrere Sender drehfest vorgesehen sind, die ihr Licht als fächerförmiges Lichtband abstrahlen. In der Ebene dieser Kreisbahn ist der Empfangseinrichtungs-Kreis vorgesehen, auf dem ein einziger Detektor mit sich änderndem, teilweise erheblichem Abstand von den Sendern vorgesehen ist. Diese Vorrichtung ist wegen der Vielzahl von Sendern aufwendig und wegen des sich ändernden erheblichen Abstands Sender-Detektor störanfällig.

Es ist auch eine Vorrichtung zum Senden und Empfangen eines sich geradlinig bewegenden Lichtstrahls bekannt, bei dem die Sendeeinrichtung nur einen Sender für den Lichtstrahl aufweist, die Empfangseinrichtung von einer geradlinig fluoreszierenden Lichtleiterfaser mit je einem Detektor an beiden Faserenden gebildet ist und der Sender den Lichtstrahl zu der fluoreszierenden Lichtleiterfaser in etwa rechtwinkelig zu dieser strahlt, wobei der Sender dicht bei der Lichtleiterfaser angeordnet ist. Diese Vorrichtung dient dazu, die Position des Senderträgers entlang der geraden Lichtleiterfaser, d.h. zwischen den beiden Detektoren zu ermitteln. Bei dieser Vorrichtung geht es also nicht um ein störungssicheres, präzises Übertragen einer ständigen Folge von Informationssignalen eines Untersuchungsgerätes der Medizintechnik.

Eine Aufgabe der Erfindung ist es daher, eine Vorrichtung der eingangs genannten Art zu schaffen, die bei verringertem apparativem Aufwand in verbesserter Weise störungssicher arbeitet. Die erfindungsgemäße Vorrichtung ist, diese Aufgabe lösend, dadurch gekennzeichnet, daß nur ein die Kreisbahn durchlaufender Sender für die Informationssignale an dem Hohlring-Senderträger vorgesehen ist, die Empfangseinrichtung von nur einer kreisförmig gebogenen fluoreszierenden Lichtleiterfaser mit einem für die Informationssignale ausgelegten Detektor, z.B. einer PIN-Diode, an mindestens einem Faserende gebildet ist und daß der Sender die Informationssignale zu der fluoreszierenden Lichtleiterfaser in etwa rechtwinkelig zu dieser strahlt.

Bei der erfindungsgemäßen Vorrichtung ist der apparative Aufwand auf einen einzigen Sender vermindert. Dabei ist die Störungsfreiheit erheblich verbessert, weil der Sender äußerst nahe am Empfänger, d.h. an der Lichtleiterfaser angeordnet sein kann und der Abstand zwischen dem Sender und der Lichtleiterfaser konstant ist. Durch Anwendung der prinzipiell bekannten Bauweise Einzelsender-fluoreszierende Lichtleiterfaser an einem Untersuchungsgerät der Medizintechnik wird der genannte erhebliche Vorteil erreicht. Dabei ist die fluoreszierende Lichtleiterfaser nicht nur in Kreisform gebracht, sondern auch zum Aufnehmen und Weiterleiten von Informationssignalen benutzt.

Es ist denkbar, die ringförmige Lichtleiterfaser radial neben der Kreisbahn des Senders anzuordnen, wobei der Sender konstant radial strahlt. Besonders zweckmäßig und vorteilhaft ist es, wenn der eine Sender in Achsrichtung strahlt und die ringförmige Lichtleiterfaser in Achsrichtung neben der Kreisbahn des Senders angeordnet ist. Diese Anordnung in zwei verschiedenen Ebenen ergibt eine bauliche Vereinfachung, weil die seitlich nebengeordnete Vorrichtung den Durchmesser des Gesamtaggregates nicht vergrößert.

Besonders zweckmäßig und vorteilhaft ist es auch, wenn die Lichtleiterfaser in einer zum Sender hin offenen Rinne angeordnet ist, deren Innenfläche reflektierend ist. Die Anordnung der ringförmigen Lichtleiterfaser in der Rinne bzw. Nut minimiert den Fremdlichteinfluß auf die Lichtleiterfaser. Licht, das beim ersten Durchgang durch die Faser nicht absorbiert worden ist, wird reflektiert und nochmals durch die Faser geleitet. Diese Ausbildung der erfindungsgemäßen Vorrichtung ergibt geringere Dämpfung und höhere Flexibilität im Aufbau. Die Rinne ist z.B. innen weiß gefärbt und damit diffus reflektierend.

Besonders zweckmäßig und vorteilhaft ist es sodann, wenn die Innenfläche der Rinne in Querschnitt parabolisch oder elliptisch und verspiegelt ist. Diese innen verspiegelte Rinne bzw. dieser innen verspiegelte Graben hat einen Querschnitt, der sich zum Sender hin erweitert. Deshalb kann ein breiterer Lichtkegel auf die Lichtleiterfaser gelenkt werden.

Das vom Sender abgegebene Licht wird nicht gefächert, sondern kann ein normaler, im Querschnitt runder Strahl sein. In der Regel tritt das Licht aus dem Sender unmittelbar auf die Lichtleiterfaser, d.h. eine zusätzliche Einrichtung zum Bündeln, also eine Linseneinrichtung, ist vermieden. Der Sender, d.h. die Austrittsstelle des Lichtstrahls aus dem Sender ist in der Regel nicht mehr als 15 mm von der Lichtleiterfaser entfernt. Es ist möglich, die erfindungsgemäße Vorrichtung zwei- oder mehrfach vorzusehen, d.h. das Untersuchungsgerät mit zwei oder mehr kreisenden Einzelsendern auszurüsten, von denen jeder auf einen eigenen Lichtleiterfaser-Ring arbeitet. Die erfindungsgemäße Vorrichtung ist in der Regel dann vorgesehen, wenn der Senderträger sich auf einer Kreisbahn bewegt, deren Mittenbereich nicht durch eine Achse oder Radialverstrebungen belegt werden kann, sodaß die Informationssignale nicht radial zu einer Achse und über die Achse abgefgührt werden können. Der optische Sender ist z.B. eine LED.

Zum Prinzip der fluoreszierenden Lichtleiterfaser: Der lichtleitende Kern einer Faser wird mit fluoreszierenden Farbstoffen dotiert. Diese Farbstoffe erzeugen bei Bestrahlung mit Licht ausreichender Energie ein für sie charakteristisches Licht mit größerer Wellenlänge als das Bestrahlungslicht. Die Abstrahlung dieses Fluoreszenzlichts erfolgt in alle Richtungen gleich, d.h. ein gewisser Teil des im Kern der Faser erzeugten Lichts gelangt in den Akzeptanzbereich der Faser, wird also in ihr geführt bis zu den Faserenden, wo er detektiert werden kann.

In der Zeichnung ist eine bevorzugte Ausführungsform der Erfindung dargestellt und zeigt
- Fig.1: eine Vorderansicht einer Vorrichtung zum Senden und Empfangen von kreisenden Lichtsignalen,
- Fig.2: einen Schnitt gemäß Linie II-II in Fig.1, in einem gegenüber Fig.1 vergrößerten Maßstab,
- Fig.3: einen Schnitt gemäß Linie III-III in Fig.2,
- Fig.4: schematisch einen Schnitt einer Lichtleiterfaser einer Rinne und
- Fig.5: ebenfalls schematisch einen Schnitt einer Lichtleiterfaser in einer Rinne.

Die Vorrichtung gemäß Zeichnung ist an einem als Computertomograf ausgebildeten Untersuchungsgerät vorgesehen, bei dem in einem Geräterumpf 1 ein Hohlring 2 als Senderträger drehbar gelagert ist, der sich bei einer Untersuchung in Richtung eines Pfeiles 3 kontinuierlich, mit gleichbleibender Geschwindigkeit dreht. Der Hohlring 2 umschließt eine Liege 4, auf die ein zu untersuchender, nicht gezeigter Patient gelegt wird. Seitlich an dem Hohlring 2, der als Senderträger dient, sitzt ein Sender 5, der in Richtung einer Mittelachse 6 wegragt und wirkt, wobei ein Lichtstrahl 7 in Achsrichtung strahlt. An dem Geräterumpf 1 ist über waagerechte Streben 8 eine Gestellplatte 9 gehaltert, auf der eine fluoreszierende Lichtleiterfaser 10 in Kreisorm montiert ist, die dem Sender 5 zugewendet ist. Während das eine Ende der Lichtleiterfaser frei endet, mündet das andere Ende der Lichtleiterfaser 10 an einem Detektor 11, der von der Gestellplatte 9 getragen ist.

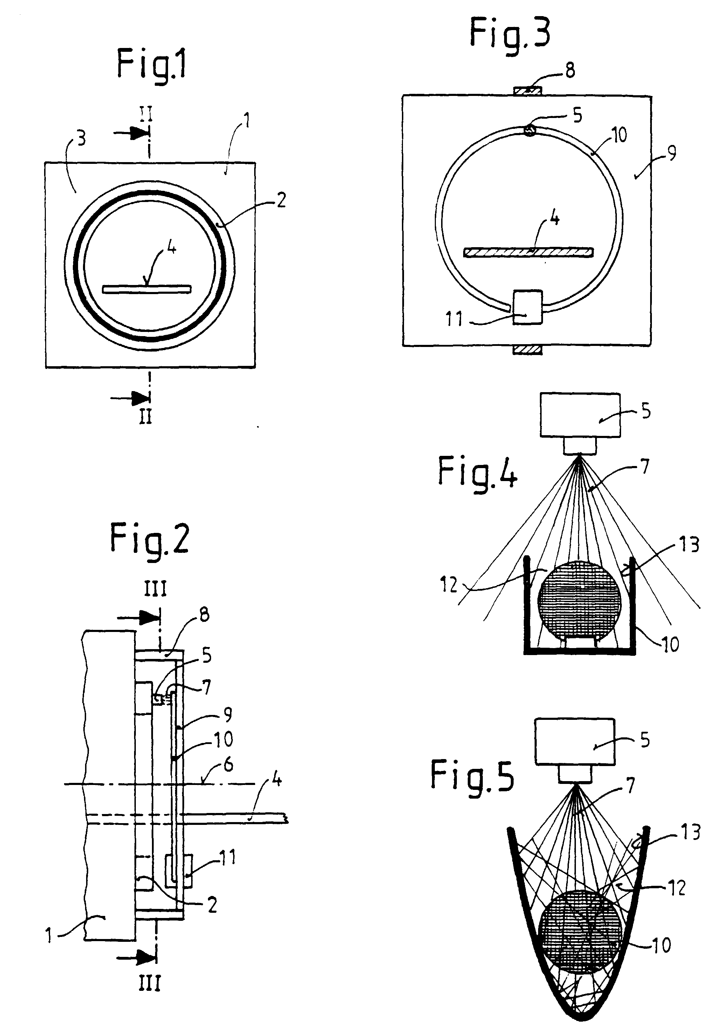

Gemäß Fig.4 und 5 bestrahlt der Sender 5, der eine Lichtquelle ist, die Lichtleiterfaser 10 in einer Rinne 12, die zum Sender hin offen ist und deren Wandung eine Innenfläche 13 bildet. Gemäß Fig.4 ist der Querschnitt der Rinne 12 rechteckig und ist die Innenfläche 13 weiß gefärbt. Gemäß Fig.5 ist der Querschnitt der Rinne 12 parabolisch und ist die Innenfläche 13 verspiegelt.

## Patentansprüche

1. Vorrichtung zum Senden und Empfangen von kreisenden Lichtsignalen, die z.B. an einem Untersuchungsgerät der Medizintechnik vorgesehen ist, das durch Messung ermittelte Information mittels Informationssignalen abgibt,
bei der parallel zu einer von der Sendeeinrichtung durchlaufenen Kreisbahn auf einem Kreis eine ortsfeste Detektor-Empfangseinrichtung angeordnet ist,
bei der ein Hohlring-Senderträger sich auf einer Kreisbahn bewegt, deren Mittenbereich nicht belegt ist, und
bei der ein Sender der Sendeeinrichtung von der Empfangseinrichtung einen Abstand aufweist,
dadurch gekennzeichnet,
daß nur ein die Kreisbahn durchlaufender Sender (5) für die Informationssignale an dem Hohlring-Senderträger (2) vorgesehen ist, die Empfangseinrichtung von nur einer kreisförmig gebogenen fluoreszierenden Lichtleiterfaser (10) mit einem für die Informationssignale ausgelegten Detektor (11) an mindestens einem Faserende gebildet ist und der Sender (5) die Informationssignale zu der fluoreszierenden Lichtleiterfäser (10) in etwa rechtwinkelig zu dieser strahlt.

2. Vorrichtung nach Anspruch 1, dadurch gekennzeichnet, daß der eine Sender (5) in Achsrichtung strahlt und die ringförmige Lichtleiterfaser (10) in Achsrichtung neben der Kreisbahn des Senders (5) angeordnet ist.

3. Vorrichtung nach Anspruch 1 oder 2, dadurch gekennzeichnet, daß die Lichtleiterfaser (10) in einer zum Sender (5) hin offene Rinne (13) angeordnet ist, deren Innenfläche (12) reflektierend ist.

4. Vorrichtung nach Anspruch 3, dadurch gekennzeichnet, daß die Innenfläche (12) der Rinne (13) im Querschnitt parabolisch oder elliptisch und verspiegelt ist.

## Claims

1. A device for transmitting and receiving rotating light signals, the device being provided e.g. on medical examination apparatus which supplies information, established by measurement, by means of information signals, wherein a stationary detector / receiving arrangement is arranged on a circle parallel to a circular trajectory described by the transmitting arrangement, wherein a hollow-ring transmitter carrier moves on a circular trajectory, the centre region of which is not covered, and wherein a transmitter of the transmitting arrangement is at a distance from the receiving arrangement, characterised in that only one transmitter (5) - describing the circular trajectory - for the information signals is provided on the hollow-ring transmitter carrier (2), the receiving arrangement is formed by only one fluorescent optical fibre (10) bent in the form of a circle and having a detector (11), designed for the information signals, on at least one fibre end, and the transmitter (5) radiates the information signals towards the fluorescent optical fibre (10) substantially at right angles thereto.

2. A device according to claim 1, characterised in that the one transmitter (5) radiates in the axial direction, and the ring-shaped optical fibre (10) is arranged next to the circular trajectory of the transmitter (5) in the axial direction.

3. A device according to claim 1 or 2, characterised in that the optical fibre (10) is arranged in a channel (13 [sic - 12]) which is open towards the transmitter (5) and the inner surface (12 [sic - 13]) of which is reflective.

4. A device according to claim 3, characterised in that the inner surface (12 [sic - 13]) of the channel (13 [sic - 12]) is parabolic or elliptical in cross-section and is silvered.

## Revendications

1. Dispositif d'émission et de réception de signaux lumineux giratoires, qui est prévu, par exemple, dans un appareil d'exploration médicale, qui délivre les informations détectées par mesure à l'aide de signaux d'information,
dans lequel, parallèlement à une orbite parcourue par le dispositif d'émission, est disposé, sur un cercle, un dispositif de réception et de détection stationnaire,
dans lequel un support d'émetteur à anneau creux se déplace sur une orbite, dont la partie médiane n'est pas occupée, et
dans lequel un émetteur du dispositif d'émission est espacé du dispositif de réception,
caractérisé,
en ce que seulement un émetteur (5) parcourant l'orbite est prévu pour les signaux d'information sur le support d'émetteur à anneau creux (2), le dispositif de réception est formé par seulement une fibre conductrice de lumière (10) fluorescente courbée circulairement avec un détecteur (11) prévu pour les signaux d'information sur au moins une extrémité de la fibre et l'émetteur (5) rayonne les signaux d'information en direction de la fibre conductrice de lumière fluorescente (10) de manière sensiblement orthogonale à celle-ci.

2. Dispositif selon la revendication 1, caractérisé en ce qu'un émetteur (5) rayonne dans la direction axiale et la fibre conductrice de lumière annulaire (10) est disposée dans la direction axiale à côté de l'orbite de l'émetteur (5).

3. Dispositif selon la revendication 1 ou 2, caractérisé en ce que la fibre conductrice de lumière (10) est disposée dans une gorge (13) ouverte en direction de l'émetteur (5), dont la surface intérieure (12) est réfléchissante.

4. Dispositif selon la revendication 3, caractérisé en ce que la surface intérieure (12) de la gorge (13) est parabolique ou elliptique en coupe et est réfléchissante.
